**Europäisches Patentamt**

**European Patent Office**

**Office européen des brevets**

(11) Veröffentlichungsnummer: **0 034 801**
**A1**

## (12) EUROPÄISCHE PATENTANMELDUNG

(21) Anmeldenummer: **81101157.6**

(22) Anmeldetag: **19.02.81**

(51) Int. Cl.³: **C 04 B 31/36**
**C 04 B 29/04, B 28 B 1/52**

(30) Priorität: **25.02.80 DE 3007012**

(43) Veröffentlichungstag der Anmeldung:
**02.09.81 Patentblatt 81/35**

(84) Benannte Vertragsstaaten:
**AT BE CH FR GB IT LI NL SE**

(71) Anmelder: **Fulguritwerke Seelze und Eichriede in Luthe bei Hannover Adolf Oesterheld GmbH & Co. Kommanditgesellschaft**
**Postfach 1208**
**D-3050 Wunstorf 1(DE)**

(72) Erfinder: **Simon, Rainer, Dr.**
**Plantagenweg 34**
**D-3050 Wunstorf 1(DE)**

(72) Erfinder: **Gutfleisch, Peter, Dipl.-Ing.**
**Schwalbenweg 10**
**D-3050 Wunstorf OT Luthe(DE)**

(74) Vertreter: **Wehser, Wulf, Dipl.-Ing. et al,**
**Roscherstrasse 12**
**D-3000 Hannover 1(DE)**

(54) **Bauplatte.**

(57) Eine Bauplatte, die aus einem Faser-Bindemittel-Gemisch aus Holzspänen und Zement unter Zusatz von Chemikalien hergestellt ist, soll so ausgebildet werden, daß ihre Zusammensetzung bei einfacher Herstellung ihrer Mischung durch andere zusätzliche Fasern ergänzbar ist.

Diese Aufgabe wird erfindungsgemäß dadurch gelöst, daß das Faser-Bindemittel-Gemisch zur Herstellung der Bauplatte aus einer Trockenmischung mit einem Anteil von etwa 5 bis 12 Gewichts-% feiner Holzspäne mit einer Länge von etwa 1 bis 8 mm, einem Zementanteil von etwa 77 bis 85 Gewichts-% und einem Anteil zusätzlicher Fasern von etwa 3 bis 10 Gewichts-% sowie einem Wasseranteil von etwa 80 bis 400 Gewichts-%, bezogen auf die Trockenmischung, besteht.

Damit wird erreicht, daß trotz der Verwendung des relativ billigen Füllstoffes Holz eine sehr biegefeste Bauplatte erzeugt wird, die ihre Festigkeit in erster Linie dem Anteil zusätzlicher Fasern verdankt.

## Bauplatte

Die Erfindung betrifft eine Bauplatte, die aus einem Faser-Bindemittelgemisch aus Holzspänen und Zement unter Zusatz von Chemikalien hergestellt ist.

Eine bekannte Bauplatte dieser Art besteht aus Grobspänen und Feinspänen, die zusammen mit dem Zement in einem Mischer mit geringem Wasserzusatz gemischt werden, wobei die Mischung noch so trocken bleibt, daß sie anschließend im Streuverfahren auf Platten aufgebracht werden kann, worauf die so gebildeten Schichten in einer Stapelpresse gepreßt werden.

Nachteilig bei dieser bekannten Bauplatte ist es, daß die Einbringung zusätzlicher Fasern, insbesondere zur Erhöhung der Biegefestigkeit und/oder der Nichtbrennbarkeit, Schwierigkeiten bereitet, weil sich diese zusätzlichen Fasern während des Mischvorganges zusammenknäulen, so daß gleichmäßige Platten nicht erzeugbar sind und die angestrebten Festigkeitseigenschaften nicht erreicht werden können.

Der Erfindung liegt demgemäß die Aufgabe zugrunde, eine Bauplatte der eingangs genannten Art so auszubilden, daß ihre Zusammensetzung bei einfacher Herstellung ihrer Mischung durch andere zusätzliche Fasern ergänzbar ist.

Diese Aufgabe wird erfindungsgemäß dadurch gelöst, daß das Faser-Bindemittel-Gemisch zur Herstellung der Bauplatte aus einer Trockenmischung mit einem Anteil von etwa 5 bis 12 Gewichts-% feiner Holzspäne mit einer Länge von etwa 1 bis 8 mm, einem Zementanteil von etwa 77 bis 85 Gewichts-% und einem Anteil zusätzlicher Fasern von etwa 3 bis 10 Gewichts-% sowie einem Wasseranteil von etwa 80 bis 400 Gewichts-%, bezogen auf die Trockenmischung, besteht.

In einem derartigen wäßrigen Faser-Bindemittel-Gemisch lassen sich auch längere zusätzliche Fasern verarbeiten, weil durch den hohen Wasseranteil eine gießfähige Mischung (slurry state) erzeugt wird, die dazu führt, daß beim Mischen und Aufgießen sich die längeren zusätzlichen Fasern nicht verknäueln können bzw. wieder entwirrt werden. Insbesondere dann, wenn das erfindungsgemäße wäßrige Faser-Bindemittel-Gemisch auf ein umlaufendes Filzband aufgegossen wird, werden hierbei insbesondere die zusätzlichen Fasern ausgerichtet, so daß sich für die so erzeugte Platte verbesserte Festigkeitswerte ergeben.

Auf diese Weise wird erreicht, daß trotz der Verwendung des relativ billigen Füllstoffes Holz eine sehr biegefeste Bauplatte erzeugt wird, die ihre Festigkeit in erster Linie dem Anteil zusätzlicher Fasern verdankt.

Der Wasseranteil im wäßrigen Faser-Bindemittel-Gemisch hängt ab von dem Wasseranspruch der einzelnen Bestandteile und damit von den jeweiligen Gewichtsprozenten dieser Bestandteile in der Trockenmischung. Er ist auf jeden Fall so zu bemessen, daß stets eine gießfähige Mischung erreicht wird.

Besonders vorteilhaft ist es, wenn die zusätzlichen Fasern Glasfasern und/oder Zellulosefasern und/oder Kunststoffasern und/oder Steinwollfasern sind, wobei diese Fasern eine größere Länge haben sollen, die aber durch das Fasermaterial bestimmt wird.

Hierbei haben die Glasfasern zweckmäßigerweise eine Länge von 10 bis 20 mm, die Zellulosefasern eine Länge von 5 bis 12 mm und die Kunststoffasern eine Länge von 6 bis 10 mm.

Eine weitere Festigkeitssteigerung wird bei der erfindungsgemäßen Bauplatte durch die Verwendung der feinen Holzspäne erreicht, insbesondere auch deswegen, weil grobe Späne sich entmischen und nicht in so gleichmäßig verteilter Form in dem Plattenquerschnitt vorliegen wie Feinspäne.

Die erfindungsgemäße Bauplatte hat darüberhinaus gegenüber anderen bekannten Bauplatten, die aus Zellulosefasern mit Zement bestehen, den Vorteil, daß sie erheblich kostengünstiger ist, weil Zellulosefasern etwa das Doppelte bis das Dreifache kosten wie feine Holzspäne.

Ein weiterer Vorteil der erfindungsgemäßen Bauplatte besteht darin, daß je nach der Größe des Anteiles der mineralischen Fasern, insbesondere der Glasfasern, sich die Nichtbrennbarkeit der Bauplatte verbessern läßt.

Zweckmäßig ist es, wenn der Trockenmischung Chemikalien mit einem Anteil von bis zu 1 Gewichts-% zugesetzt werden, die insbesondere als Beschleuniger zum Aushärten des Zementes dienen.

Eine weitere Kostenverbilligung der erfindungsgemäßen Bauplatte ergibt sich dadurch, daß ein Teil des Zementes durch anorganische Zuschläge wie Kalksteinmehl, Elektrofilterasche, Schlacke oder dgl. ersetzt werden kann. Es können hierbei bis zu 50 % des Zementanteiles durch solche Zuschläge ersetzt werden. Neben der Verbilligung der Bauplatte durch Verwendung solcher Zuschläge ergibt sich hierdurch der weitere Vorteil, daß bei gleichbleibender Festigkeit die Dehnungen und Schrumpfungen durch Feuchtigkeitsaufnahme und Abgabe verringert werden und dadurch Verbiegungen oder Verwindungen der Bauplatte vermieden werden.

Ein vorteilhaftes Verfahren zur Herstellung der erfindungsgemäßen Bauplatten besteht darin, daß das aus feinen Holzspänen, dem Zement, den zusätzlichen Fasern und dem Wasser gebildete wäßrige Faser-Bindemittel-Gemisch durch einen Verteiler direkt auf ein umlaufendes Filzband aufgetragen wird, worauf das so gebildete Faservlies in Einzelabschnitten von dem Filzband abgenommen wird und worauf die Einzelabschnitte in einer Stapelpresse zum Entwässern und Verdichten gepreßt werden.

Damit läßt sich die erfindungsgemäße Bauplatte mit dem relativ einfach ablaufenden sogenannten Langfilzverfahren herstellen, bei welchem Zwischenarbeitsgänge vermieden sind. Die bekannte aus Holzspänen mit Zement bestehende Bauplatte erfordert nämlich ein Aufstreuen im trockenen Zustand auf Preßbleche, die in einem Zwischenarbeitsgang in einer Stapelpresse unter Verwendung von Einspanngerüsten zusammengepreßt werden müssen, bis die Auffederwirkung der Fasern beseitigt ist. Nach einem Durchlauf durch Härtekammern ist bei dem bekannten Verfahren ein erneutes Pressen des Plattenstapels erforderlich. Diese zwischengeschalteten Arbeitsgänge werden mit der erfindungsgemäßen Bauplatte vermieden, indem sofort die Einzelabschnitte des naß auf das Filzband aufgebrachten Faservlieses nach ihrem Abschneiden auf Plattenlänge abschließend zum Zwecke des Verdichtens und Entwässerns gepreßt werden können.

Damit läuft auch das Verfahren zur Herstellung der erfindungsgemäßen Bauplatte sehr viel kostengünstiger ab als das Verfahren zur Herstellung der bekannten Platte.

A n s p r ü c h e

1. Bauplatte, die aus einem Faser-Bindemittel-Gemisch aus Holzspänen und Zement unter Zusatz von Chemikalien hergestellt ist, dadurch gekennzeichnet, daß das Faser-Bindemittel-Gemisch zur Herstellung der Bauplatte aus einer Trockenmischung mit einem Anteil von etwa 5 bis 12 Gewichts-% feiner Holzspäne mit einer Länge von etwa 1 bis 8 mm, einem Zementanteil von etwa 77 bis 85 Gewichts-% und einem Anteil zusätzlicher Fasern von etwa 2 bis 10 Gewichts-% sowie einem Wasseranteil von etwa 80 bis 400 Gewichts-%, bezogen auf die Trockenmischung, besteht.

2. Bauplatte nach Anspruch 1, dadurch gekennzeichnet, daß das wäßrige Faser-Bindemittel-Gemisch eine gießfähige Mischung (slurry state) darstellt, deren Wasseranteil von dem Wasseranspruch der übrigen Bestandteile abhängt.

3. Bauplatte nach Anspruch 1 und 2, dadurch gekennzeichnet, daß die zusätzlichen Fasern Glasfasern und/oder Zellulosefasern und/oder Kunststoffasern und/oder Steinwollfasern sind.

4. Bauplatte nach Anspruch 3, dadurch gekennzeichnet, daß die Glasfasern eine Länge von 10 bis 20 mm, die Zellulosefasern eine Länge von .5 bis 12 mm und die Kunststoffasern eine Länge von 6 bis 10 mm haben.

5. Bauplatte nach einem der vorhergehenden Ansprüche, dadurch gekennzeichnet, daß der Trockenmischung Chemikalien mit einem Anteil von bis zu 1 Gewichts-% zugesetzt sind.

6. Bauplatte nach einem der vorhergehenden Ansprüche, dadurch gekennzeichnet, daß ein Teil des Zementes durch anorganische Zuschläge wie Kalksteinmehl, Elektrofilterasche, Schlacke oder dgl. ersetzt ist.

7. Bauplatte nach Anspruch 6, dadurch gekennzeichnet, daß bis zu 50 % des Zementanteiles durch Zuschläge ersetzt sind.

8. Verfahren zur Herstellung von Bauplatten nach einem der vorhergehenden Ansprüche, dadurch gekennzeichnet, daß das aus feinen Holzspänen, dem Zement, zusätzlichen Fasern und dem Wasser gebildete wäßrige Faser-Bindemittel-Gemisch durch einen Verteiler direkt auf ein umlaufendes Filzband aufgetragen wird, worauf das so gebildete Faservlies in Einzelabschnitten von dem Filzband abgenommen wird und worauf die Einzelabschnitte in einer Stapelpresse zum Entwässern und Verdichten gepreßt werden.

0034801

Nummer der Anmeldung

**Europäisches Patentamt**

**EUROPÄISCHER RECHERCHENBERICHT**

EP 81 10 1157.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB -A - 1 476 126 (W.L. COPELAND) <br> * Ansprüche, Seite 2, Zeilen 40 bis 57, 110 bis 120, Beispiel 1 * <br> -- | 1-3, 5-7 |
| A | GB - A - 1 421 556 (TAC CONSTRUCTION MATERIALS) <br> * Seite 1, Zeilen 30 bis 52 * <br> -- | 1-3,8 |
| A | CH - A - 275 720 (M. AVIOLAT) <br> * ganzes Dokument * <br> -- | 1 |
| A | GB - A - 1 441 234 (TAC CONSTRUCTION MATERIALS) <br> * Seite 1, Zeilen 63 bis 85 * <br> -- | 1,8 |
| A | DE - A1 - 2 737 058 (COMMONWEALTH) <br> SCIENTIFIC AND INDUSTRIAL RESEARCH ORGANIZATION) <br> * Ansprüche * <br> -- | 1 |
| A | DE - A1 - 2 851 813 (AMIANTUS) <br> * Anspruch 1 * <br> ---- | 1,8 |

**KLASSIFIKATION DER ANMELDUNG (Int. Cl.³)**

C 04 B 31/36
C 04 B 29/04
B 28 B 1/52

**RECHERCHIERTE SACHGEBIETE (Int. Cl.³)**

B 28 B 1/52
B 32 B 13/00
B 32 B 21/00
C 04 B 15/00
C 04 B 29/00
C 04 B 31/00
C 04 B 43/00
D 21 J 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 22-04-1981 | HÖRNER |

EPA form 1503.1 08.78